# EUROPEAN PATENT SPECIFICATION

(11) **EP 3 203 849 B1**
(45) Date of publication and mention of the grant of the patent: **22.04.2020**
(21) Application number: 15785065.2
(22) Date of filing: 09.10.2015
(51) Int. Cl.: A23P 20/20, A23L 21/25, A21D 13/33, A21D 13/36, A21D 13/48

(54) **EDIBLE ARTICLE**
ESSBARER ARTIKEL
ARTICLE COMESTIBLE

(30) Priority: 09.10.2014 IT MI20141764
(43) Date of publication of application: 16.08.2017
(73) Proprietor: Terragni, Francesco, 6900 Lugano (CH); Terragni, Carlotta, Locarno 6600 (CH); Zaretti, Fabio, Lumino 6533 (CH)
(72) Inventor: Terragni, Francesco, 6900 Lugano (CH); Terragni, Carlotta, Locarno 6600 (CH); Zaretti, Fabio, Lumino 6533 (CH)
(74) Representative: Zardi, Marco
(86) International application number: PCT/EP2015/073459
(87) International publication number: WO 2016/055641

(56) References cited:
- WO-A1-2006/135989
- JP-A- S58 134 936
- US-A- 4 873 099

## Description

### TECHNICAL FIELD OF THE INVENTION

The present invention is classifiable within the food sector. In particular, the present invention relates to an edible article. Even more particularly, the present invention relates to a food product. In detail, the present invention relates to a food product particularly suitable for consumption in a sporting environment, namely during and/or after a sports activity as an energy supplement and/or booster.

### PRIOR ART

It is known, especially in a sporting environment, that there is a tendency to consume energy supplements or boosters during and after the sporting activity, respectively. At present both solid and liquid energy supplements and boosters are known, where in particular the solid supplements are prepared in the form of bars, for example based on dried fruit, cereals, chocolate and other energy substances.

As regards liquid energy supplements, these for the most part consist of beverages preferably with a low sugar content.

The energy supplements and/or boosters known according to the present state of the art are, however, characterized by numerous drawbacks which limit the consumption thereof, especially during the sporting activity.

For example, bars of the known type, which are essentially solid, are often perceived as being too "dry", this characteristic inducing the person to consume beverages or liquids in general at the same time.

Moreover, the bars of the known type do not satisfy the increasingly more widespread desire among consumers, in particular among athletes, that natural products if not bio-products should be used as far as possible.

Among the natural products which are most popular among consumers, honey has recently assumed an increasingly important role.

The only problem is that the integration of honey in bars of the known type, in particular in solid energy supplements of the known type, necessarily involves prior treatment of said honey in order to limit or reduce the fluidity thereof such that the bars maintain their solidity and consistency characteristics; basically, in order to prepare solid bars based on honey or at least containing honey the natural characteristics of the honey must be dispensed with, at least partly, or the content thereof in the bars must be limited so as to avoid modifying substantially the consistency (essentially solidity) characteristics.

Various efforts and attempts have therefore been made in order to overcome the drawbacks mentioned above: for example, disposable or pocket-size packages containing natural honey, in particular in the form of packets and/or sachets, have been marketed.

These disposable or pocket-size packages have, however, in turn various drawbacks. A first drawback is in particular due to the difficulty of opening the pocket-size packages and consuming their contents, this difficulty being particularly great during the sporting activity, where there is a considerable risk of undesirable spillage of the contents and/or soiling for example of the hands, clothes and/or equipment.

Moreover, the aforementioned pocket-size packages give rise to the need for disposal of the container, which is usually made of plastic, in a situation where, especially during the sporting activity, there are limited waste collection facilities, such as rubbish bins or the like, with the result that the athlete must put the empty container back in his/her pocket or inside a bag, with the further risk of soiling his/her clothes and/or accessories.

Moreover, the pocket-size packages containing honey in the natural - and therefore fluid - state do not give the athlete the possibility of "biting into" something, this often being perceived in a particularly negative manner by athletes who, on the contrary, wish to have the sensation of biting into something solid; basically, it has been found that the sensation of biting into something solid helps limit the sense of hunger and/or tiredness or fatigue.

Examples of edible articles and/or food products which intended in particular for consumption in a sporting environment are known from each one of the prior art documents JP S58 134936, AU 91054 82, US 4 873 099 and WO 2006/135989.

The main object of the present invention is therefore to solve or at least partly overcome the abovementioned problems which characterize the food products for sporting use of the known type, in particular the energy supplements of the known type.

In particular, it is an object of the present invention to provide the users with an energy supplement or booster which is able to overcome the problems associated with the use of both solid and liquid or fluid energy supplements and/or boosters of the known type.

In detail, one object of the present invention is to provide users, in particular sports users, with a food product of the aforementioned type formed both by solid components and by non-solid, for example fluid, components, but also components in powder and/or granular form; in this way, while eating, the user will always have the sensation of "biting into" or "chewing" something solid, but may also take in substances which have a different consistency and are therefore able to be ingested and assimilated more rapidly, such as honey in the natural state.

A further object of the present invention is also to provide the users with an edible article or substrate, which is substantially solid and shaped so as to be able to house or contain edible products or substances which are fluid but also in powder or granular form.

WO 2006/135989 is an example of edible article according to the prior art.

### SUMMARY OF THE PRESENT INVENTION

The present invention is based on the general consideration that the problems encountered in the prior art may be at least partly overcome by means of the production of a substantially solid edible article which is shaped so as to define a space suitable for containing a food substance of varying consistency, for example a fluid or preferably natural product such as honey or the like.

In this way, the edible article may be used as a substrate for the consumption of food, namely as an edible "plate" or "dish" to be eaten during or at the end of a meal, such a snack, a picnic or the like.

Moreover, the article or substrate may also be used as a component of a more complex food product, namely a ready-to-eat food product composed of solid edible parts and edible parts of varying consistency, for example fluid products, such as honey or similar natural products.

In fact, the present invention is based on the further consideration that by suitably shaping the solid substrate it will be possible to arrange or stack on top of each other at least two substrates so as to define between the two substrates a closed space containing a food substance which is for example fluid, such as honey or the like. Thus it will therefore be possible to provide users with a food product which is designed to be "bitten into" or "chewed", the fluid substance contained therein being able to be eaten together with the solid parts.

On the basis of the above considerations, below an edible article is described, in particular a substantially solid edible waffle, said article comprising a base or bottom with an upper surface and a lower surface and a tapered edge with an inner surface and an outer surface, where said tapered edge extends from said base or bottom with a predefined inclination, the shape of said article being such that, by arranging two of said articles on top of each other, the bottom and the tapered edge of the upper article are housed at least partially inside the space delimited by the tapered edge and by the bottom of the lower article so as to define a closed space of predefined volume between the said two articles, in particular a closed interspace of predefined volume, said closed space being delimited at the bottom, on the sides and at the top, respectively, by the upper surface of the bottom of the lower article, at least by a portion of the inner surface of the tapered edge of the lower article and at least by a portion of the lower surface of the bottom of the upper article, the edible article further including the features of claim 1.

The shape of said bottom and tapered edge is such that, when said two articles are arranged on top of each other, a portion of the outer surface of the tapered edge of the upper article comes into contact with the inner surface of the tapered edge of the lower article.

The volume of said closed space is defined by the inclination and/or by the thickness of the tapered edge of said article.

The article further comprises a peripheral edge which extends outwards from said tapered edge, with a lower surface directed towards said tapered edge and an upper surface opposite to said lower surface.

The peripheral edge comprises a plurality of projections which extend from said lower surface of said peripheral edge.

The extension or length of said projections is such that, when two of said articles are arranged on top of each other, the free end of each of said projections of the upper article comes into contact with the upper surface of the peripheral edge of the lower article.

The inner surface of said tapered edge may comprise a depression which defines a supporting surface so that, when two of said articles are arranged on top of each other, a portion of the lower surface of the bottom of the upper article comes into contact with said supporting surface of the tapered edge of the lower article.

Preferably, said bottom, tapered edge and peripheral edge of said article have a circular, frustoconical and annular form, respectively.

Furthermore the present invention also relates to a food product suitable in particular for consumption in the sports sector as an energy supplement and/or booster for an athlete, said product comprising an edible article as specified above and at least one food component contained in said space delimited by said tapered edge of said article.

The food product comprises at least two of said articles arranged on top of each other, said at least one food component being contained inside said closed space defined by said articles arranged or stacked on top of each other.

Advantageously, said at least one food component is of the fluid type with a consistency less than that of said at least one substantially solid edible article.

Furthermore the present invention also relates to a food package according to claim 7 which comprises one or more edible articles and/or one or more food products according to claim 5, said food articles and/or food products being if necessary arranged on top of each other, said articles and/or products being contained inside a closed protective container or wrapping.

Preferably, said protective wrapping or container is of the biodegradable type.

Furthermore the present invention also relates to a method or process for the production of a food product as specified above, said method comprising the preparation of at least one first and one second food article as specified above; the introduction of at least one food component inside the space delimited by the tapered edge of said at least one first edible article; the arrangement of said at least one second edible article on said at least one first edible article so as to confine said at least one food component in said closed space defined by said first and second food articles arranged on top of each other, and further including the features of claim 9.

Preferably, said at least one food component is of the fluid type, in particular honey-based.

Further the present invention also relates to a mould for the production of food articles by molding and drying a liquid or fluid mixture, said mold being shaped so as to allow the production of an edible article as specified above.

### BRIEF DESCRIPTION OF THE FIGURES

Further advantages, aims and characteristic features as well as embodiments of the present invention are defined in the claims and will be clarified below by means of the following description of embodiments illustrated in the attached sets of drawings 5 and 6; in the figures, corresponding or equivalent characteristic features and/or component parts of the present invention are identified by the same reference numbers. It should be noted, however, that the present invention is not limited to the embodiments described below and shown in the sets of drawings; on the contrary the scope of the invention includes all those variants and/or modifications of the embodiments described below and shown in the attached sets of drawings which will be clear and obvious to the person skilled in the art.

In particular, in the figures:
- Figures 1a, 1b, 1c, 1d and 1e show respectively a side view, a cross-sectional view, a plan view from the upper side, a perspective view from the upper side and a perspective view from the lower side of the edible article according to an example not covered by the present invention;
- Figures 2a and 2b show respectively a cross-sectional view and perspective view from the upper side of a food product according to an example not covered by the present invention;
- Figures 3a and 3b show respectively a cross-sectional view and perspective view from the upper side of a further example of the food product , not covered by the present invention;
- Figures 4a, 4b, 4c and 4d show a plan view from the upper side and cross-sectional views, respectively, of an edible article and food products according to an example not covered by the present invention;
- Figures 5a, 5b, 5c and 5d show a plan view from the lower side and cross-sectional views, respectively, of an edible article and food products according to an embodiment of the present invention;
- Figures 6a, 6b, 6c and 6d show a plan view from the upper side and cross-sectional views, respectively, of an edible article and food products according to an embodiment of the present invention.

### DETAILED DESCRIPTION OF THE PRESENT INVENTION

Although the present invention is described below with reference to its embodiments shown in sets of the drawings, the present invention is not limited to the embodiments described below and shown in the drawings. On the contrary, the embodiments described below and shown in the sets of drawings clarify some aspects of the present invention, the scope of which is in any case defined by the claims.

The present invention may be conveniently used in particular in the food sector, in particular in the sector of products for sporting use.

It must be pointed out, however, that the present invention is not limited to a use of this type. On the contrary, the present invention may be conveniently used in all those cases where it is required to use a solid edible article suitable for containing food products of varying consistency, for example fluid products, but also products in powder or granular form.

Embodiments of the finding according to the present invention will be described below; in the figures, characteristic features and/or component parts which are similar or equivalent are identified by the same reference numbers.

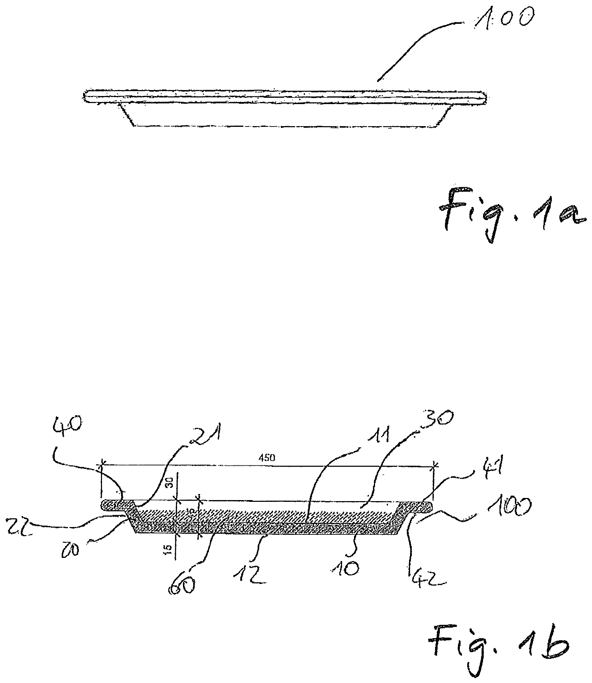

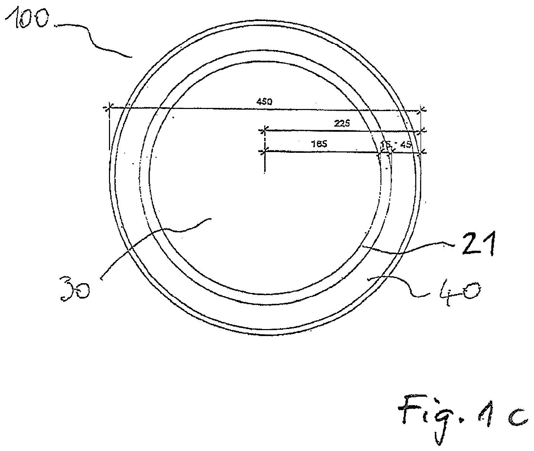

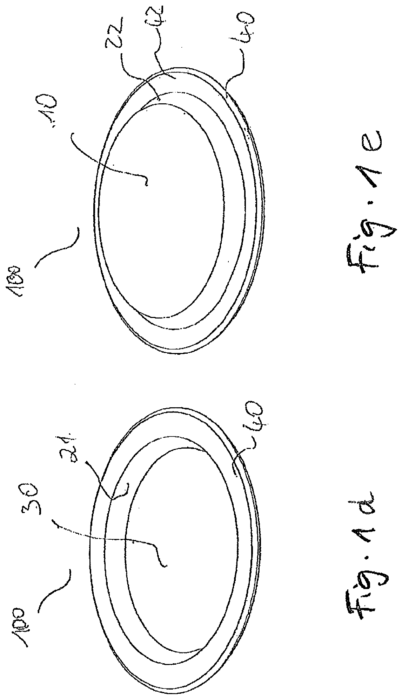

In Figures 1a to 1e an example of an edible article (referred to below also as "waffle") useful to understand the present invention is shown and is identified by the reference number 100. The figures show clearly how the edible article or waffle 110 has a form essentially resembling that of an ordinary plate or dish for ordinary use in the food sector. The article 100 comprises in fact a substantially (but not necessarily) flat bottom 10 with an upper surface 11 and an opposite lower surface 12. Depending on the requirements and/or circumstances, one of the two surfaces 11 and 12 or even both surfaces could be rounded or curved, for example concave and/or convex and the same upper surface 11 and lower surface 12 must not necessarily be parallel to each other. Moreover, one of the two surfaces 11 and 12 or both of them could have depressions or projections according to a predefined design; the form of the surfaces 11 and 12 is therefore not limited to that shown in the figures. A tapered edge 20 extends with a predefined inclination from the bottom 10, in particular from its outer or peripheral edge, the tapered edge 20 comprising an inner surface 21 and an outer surface 22 opposite to the inner surface 21, the inner surface 21 and the outer surface 22 extending respectively from the upper surface 11 and lower surface 12 of the bottom 10. With regard to the inner surface 21 and outer surface 22 the same comments made above in connection with the upper surface 11 and lower surface 12 of the bottom 10 are applicable; namely, the inner surface 21 and outer surface 22, depending on the requirements and/or circumstances, may be non-parallel, concave and/or convex, and have depressions or projections according to a predefined design. A further peripheral edge 40 extends moreover, according to a predefined orientation and/or inclination, from the tapered edge 20, wherein the orientation and/or inclination of said further peripheral edge 40 differs from that of the tapered edge 20, said peripheral edge 40 being defined by an upper surface 41 and by a lower surface 42 opposite to said upper surface 41 and facing toward the external surface 22 of the tapered edge 20 so as to define an angle of predefined amplitude preferably bigger than 90°, wherein said upper surface 41 and said lower surface 42 extend respectively from the inner surface 21 and outer surface 22 of the tapered edge 20; the orientation of the peripheral edge 40 is parallel to the bottom 10 or inclined and may also have an upper surface 41 and lower surface 42 with an orientation and shape as required (see comments made with regard to the surfaces 11 and 12 and the surfaces 21 and 22 of the bottom 10 and tapered edge 20, respectively). The tapered edge 20 defines, together with the bottom 10, an internal space 30 intended to contain a food substance or component 60, for example a food substance to be eaten during a snack or picnic or the like or also for example a paste-like or fluid food substance such as honey, chocolate or the like. As a result the article 100 may be used as a support for different foods, such as salads, appetizers, creams, sauces or the like and then also itself be eaten, and also as a substrate for a further food substance or component 60, for example honey, deposited inside the internal space 30 of the waffle, so as to allow a consumer to eat simultaneously both the waffle and the food product or substance 60 contained inside it.

It should also be pointed out that the dimensions (in millimeters) indicated in the figures of the waffles shown therein are indicative, but relatively variable depending on the requirements and/or circumstances, in particular depending on the intended use. For example, the diameter of the waffle, in the case where it is used as an "edible plate" may be between 100 mm and 200 mm or more, as in the case of an ordinary plate made of ceramic or similar materials. The same applies to the form of the waffle 100 which is not limited to the circular form shown in the figures, but may vary and comprise rectangular, square, polygonal or similar forms in plan view.

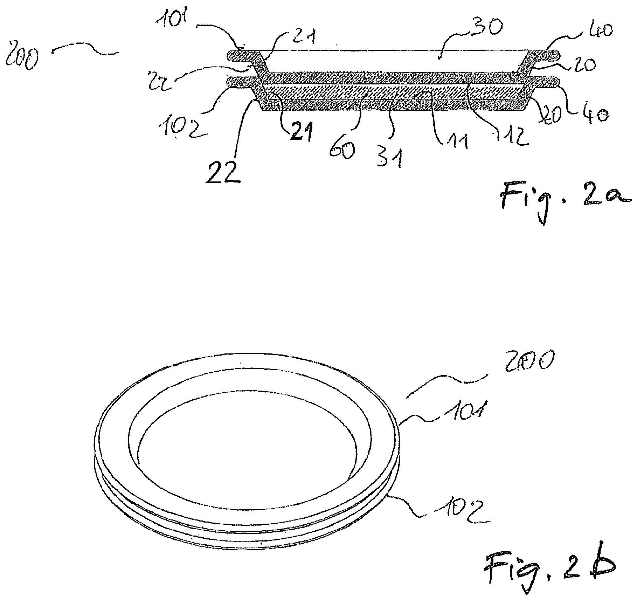

Figures 2a and 2b, in which component parts and/or characteristic features of the article or waffle shown in them and already described above with reference to other figures are identified by the same reference numbers, illustrate another example useful to understand it.

Figure 2a shows, in fact, in particular the result obtained by arranging on top of each other (stacking) two edible articles 101 and 102 of the type described above. It can be seen in fact from the figure that the shape of the article 100, in particular the inclination of the tapered edge 20 with respect to the bottom 10 and the thickness of the tapered edge 20 with respect to the bottom 10, are such that, by arranging two articles 101 and 102 on top each other as shown in the figures, the tapered edge 20 and the bottom 10 of the upper article 101 are housed at least partly inside the space 30 defined by the tapered edge 20 and by the bottom 10 of the lower article 102. And in any case, the at least partial introduction of the tapered edge 20 and the bottom 10 of the upper article 101 will not be such as to produce contact between the lower surface 12 of the bottom 10 of the upper article 101 and the upper surface 12 of the bottom 10 of the lower article 101; on the contrary the contact zone between the two articles 101 and 102 will be limited to a portion of the outer surface 22 of the tapered edge 20 of the upper article 101 which makes contact with a corresponding portion of the inner surface of the tapered edge 20 of the lower article 102 so as to define a closed volume or a closed interspace 31 between the two articles 101 and 101, in particular between their two bases 10. In even greater detail, the closed space 31 will be delimited by the upper surface of the bottom 10 of the lower article 102, by a portion of the inner surface 21 of the edge 20 of the lower article 102 (that portion which is not affected by contact with the upper article 101), and by the lower surface 12 of the edge 10 of the upper article 101.

This will therefore result in the formation of a product 20 comprised of two edible article 101 and 102, where the two edible articles 101 and 102 define a closed space suitable for containing a food substance 60 different from that constituting the articles 101 and 102, for example a fluid substance such as honey or similar products, without the risk of accidental and undesirable spillage of the said fluid substance. The product 200, especially if completed with a fluid food substance 60 contained inside the interspace 31, is therefore particularly suitable for use as a snack or energy supplement or booster in a sporting environment. The consistency of the edible articles 101 and 102 (which are essentially solid) makes the product particularly attractive and appealing for consumption during sports activities since it may be bitten into and/or chewed, the fluid substance, for example honey, making the product particularly attractive both from the point of view of taste and because it satisfies the particularly widespread demand for use of natural products. The product 200 avoids moreover the drawbacks of the currently marketed pocket-sized packages containing honey, where there is inevitable soiling of the hands, clothes and also sports accessories or equipment, and limits the need to dispose of the wrapping.

It must be pointed out, however, that the advantages arising from the use of edible article of the type described above are not limited to those arising from the production of food products comprising one or more articles and one or more food substances 60 which are more or less fluid and housed respectively inside the internal space 30 (in the case of a single article) or inside the interspaces 31 (between two stacked articles). On the contrary, the edible articles 100 according to the present invention (which are substantially solid) are also suitable for being eaten as such, since several articles which may also be different (or have a different composition) may constitute a snack which is particularly appealing and less "problematic", but is in any case able to satisfy the more immediate need for an energy supplement, and since moreover the shape of the articles facilitates the arrangement thereof on top of each other and therefore the packaging in packets.

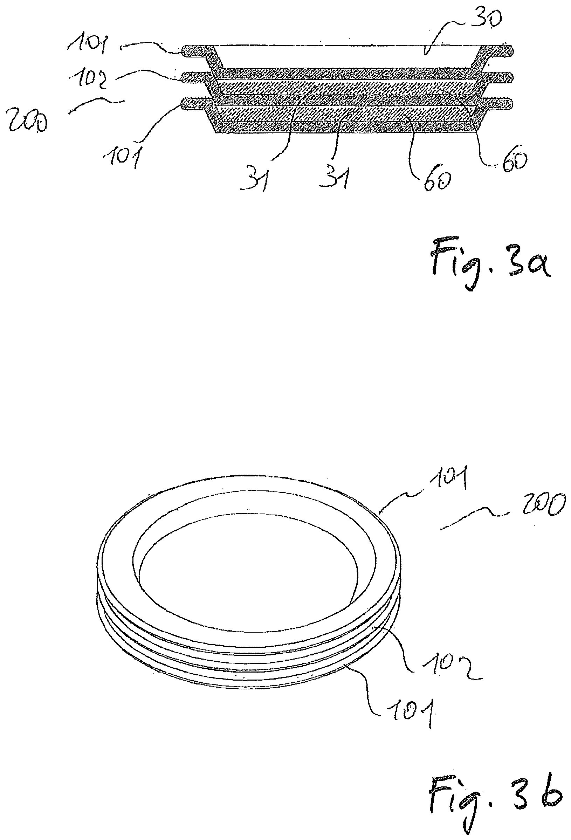

Figures 3a and 3b, in which as usual component parts and/or characteristic features already described above with reference to other figures are identified by the same reference numbers, show respectively a cross-section and perspective view of a further example of a product 200 useful to understand the present invention. The product 200 is in particular formed by arranging or stacking on top of each other three substantially solid edible articles 100 as described above; since the said articles 100 are substantially similar to those described above, a further description thereof is omitted for reasons of brevity.

As a result therefore the product 200 shown in Figures 3a and 3b is characterized by the presence of two closed spaces 31 which may be filled (at least partially) with a food substance or a food product which is substantially fluid or alternatively also with two food substances or products which are substantially fluid, but different, for example in terms of nutritional and/or organoleptic properties, consistency, taste or composition. If necessary, a solution is also possible where one of the two closed spaces 31 is filled with a fluid food product, while the second closed space 31 is filled with a food substance in powder or granular form. Obviously solutions are also possible where only one closed space 31 is filled with a food substance which is fluid or in powder or granular form and the other closed space is kept empty, or also solutions where the closed spaces 31 are left substantially empty.

As a result, therefore, the number of articles 100 may vary as required from 1 to n, thus providing products 200 with a number of closed spaces or interspaces 31 which vary from 1 to n-1, where the content of each space may be decided as required.

Below a description of an example of a product, relating to the composition of both the solid edible articles or waffles 100 and the fluid substance contained in said product, will be provided.

**Table 1. Composition**

| **Product** | **1. Energy supplement (before and during sporting activity)** | **2. Product for energy recovery (after sporting activity)** |
|---|---|---|
| **(Liquid) content** | • Honey 50 g | • Honey 50 g |
| | • Rhodiola Rosea 300 mg | • Glutamine 2-5 g |
| | | • Leucine 1 g |
| | • Guar flour 5 g | • Isoleucine 0.5 g |
| | | • Valine 0.5 g |
| | | • Guar flour 5 g |
| **Waffle** | • Water | • Water |
| | • Flour/rice flour | • Flour/rice flour |

The stabilizer indicated in Table 1, Guar flour (E412), is particularly suitable for products intended for consumers suffering from diabetes and/or celiac disease (i.e. allows also these persons to use said products). The waffle 100 may be produced in two versions: with type 00 flour or alternatively with rice four, so as to be gluten-free.

With the compositions indicated in Table 1, products or supplements 200 with 2, 3, 4, or n waffles are obtained; in the case of the version with 2 waffles, the energy value due to the fluid content (if present) will be equal to 50 Kcal, in the version with 3 waffles it will be equal to 100-110 Kcal, while in the version with 4 waffles it will be equal to 130-140 Kcal.

The food or edible waffles 100 according to the present invention are suitable for being produced by means of machines which allow them to be molded in sheet form from a fluid compound (mixture). In particular, according to a preferred and advantageous solution, the fluid compound or mixture (water and flour) is inserted in a hot plate containing the waffle mold; the plate is then pressed for the time needed to cook the waffle which will then be extracted from the mold and/or machine. The waffle sheets are then moistened in a steam unit to facilitate cutting thereof in the desired form. Cutting is performed finally by means of a slicer which forms the single waffles 100.

The ingredients for the fluid content are mixed beforehand and are then inserted inside the waffles. The fluid content is inserted between two waffles by means of a volumetric metering device.

Moreover, by means of a suitable packaging, it will be possible to package the products 200 according to the present invention using an ecological solution, for example by making the wrapping or container using biodegradable material.

Finally, in the case of waffles 100 with a circular plan-view form intended for the manufacture and production of food products or supplements 200 of the type described above, the dimensions may be, by way of non-limiting example, those indicated below.

Overall diameter Ø (including peripheral edge): 45 mm
Internal diameter Ø (of the bottom): 32 mm
Overall height: 4.5 mm
Thickness of bottom: 1.5 mm
Useful closed space between two waffles arranged on top of each other: 2 mm

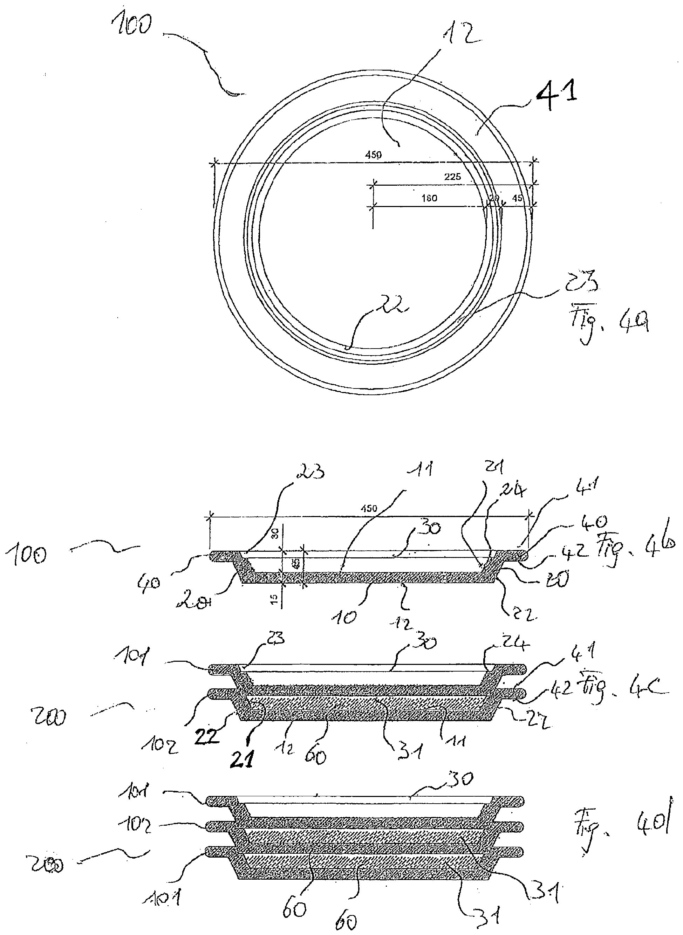

A further example of the edible article 100 and the food supplement or product 200 useful to understanding thr is shown in Figures 4a, 4b, 4c and 4d, where the food supplement or product 200 may comprise edible articles 100 consisting of a number variable from 1 to n.

The main difference between the disclosure shown in Figures 4a to 4d and the one described above is that the article 100, at the point where the inner surface 21 of the tapered edge 20 and the upper surface 41 of the peripheral edge 40 converge, comprises a depression or recess 23 which extends along the perimeter of the tapered edge 20 and defines a supporting surface 24, the inclination of which may be chosen as required, in the case shown the supporting surface 24 being substantially parallel to the upper surface 11 of the bottom 10 and to the upper surface 41 of the peripheral edge 40. The utility of the recess or depression 23, in particular of the supporting surface 24, can be clearly understood with reference to Figures 4c to 4d, where it is shown how, by arranging two or more articles 100 on top of each other (i.e. stacking them on each other), in the case of two adjacent articles 101 and 102, a peripheral annular portion of the lower surface 12 of the bottom 10 of the upper article 101 comes to rest on the supporting surface 24 of the lower article 102. Moreover, by suitably choosing the shape of the recess 23 it is also possible to obtain contact between a portion of the outer surface 22 of the tapered edge 20 of the upper article 101 and the surface of the recess 23 which extends from the supporting surface 24.

In this way, it is possible to obtain a perfect seal between the two articles 101 and 102 arranged on top of each other, namely a perfect closure of closed space 31 or interspace between the two articles, avoiding therefore any undesirable spillage of the contents of the space 31, for example of the fluid food substance or component (honey) 60 contained inside the space 31. In particular, the recess 23 will allow the height of the interspace 31 to be defined in a precise and repeatable manner. Moreover, the recess 23 will facilitate the operations of stacking and/or arrangement of the articles 100 on top of each other, resulting in a particularly stable and therefore manageable "stack" of articles 100, with obvious advantages for example as regards the packaging operations.

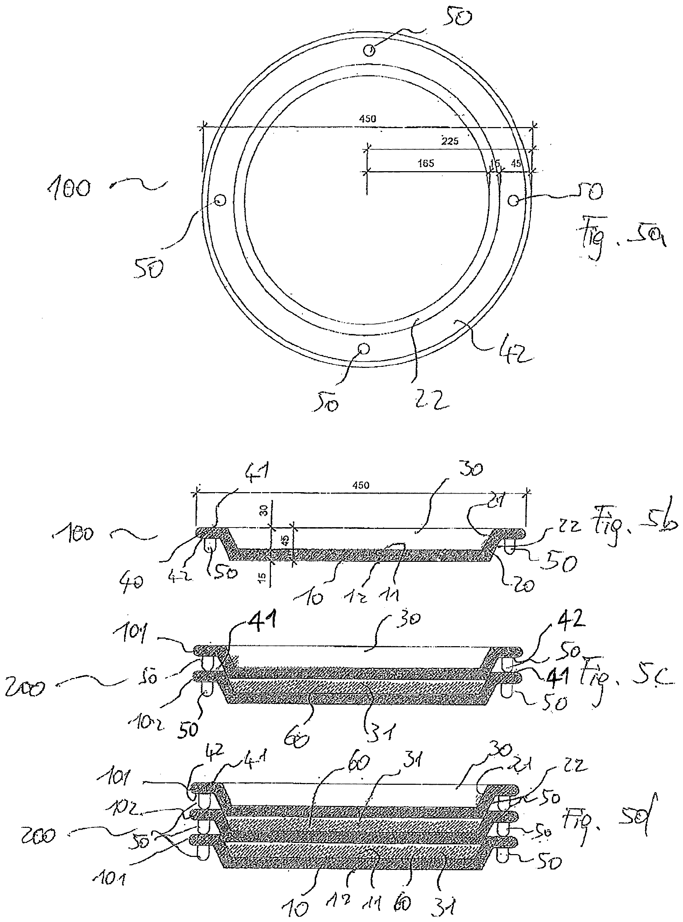

Figures 5a to 5d show, respectively, an embodiment of the article 100 and the product 200 according to the present invention, where as usual the product 200 may comprise a number of articles 100 variable from 1 to n. Component parts and/or characteristic features of the article shown in figures 5a to 5d and already described above with reference to examples useful to understand the invention are identified by the same reference numbers.

In this case, the main characteristic feature of this embodiment relates to a plurality of projections 50 (four in the example shown, although the actual number may vary according to the requirements and/or circumstances) which extend from the lower surface 42 of the peripheral edge 40 of the article 100 and are distributed at regular intervals along the peripheral edge 40. Although in the example shown the form of each of the projections 50 corresponds to that of a small peg or pin, the actual form of each projection 50 may be chosen according to the requirements and circumstances; for example, projections which each occupy a circular segment fall within the scope of the present invention, or a single annular projection which extends along the entire peripheral edge 40 will also be possible, it being possible to provide also projections with a different form, for example pegs alternating with projections which extend along a circular segment.

By arranging two or more articles 100 on top of each other as shown in Figures 5c and 5d, in the case of two adjacent articles 101 and 102, the projections 50 of the upper article 101 will rest on the upper surface 41 of the peripheral edge 40 of the lower article 102; it can therefore be seen in this case how the actual height of the closed space or interspace 31 will be defined by the extension or length of the projections 50. In this case also, therefore, the projections 50 allow definition in a reliable and repeatable manner of the degree of partial penetration of the bottom 10 and the tapered edge 20 of the upper article 101 inside the space 30 of the lower article 102 and, therefore, definition of the actual height of the closed space or interspace 31 defined by the two articles 101 and 102 arranged on top of each other. In this case, closure of the space 31 is obtained by means of contact between a portion of the outer surface 22 of the tapered edge 20 of the upper article 101 and a corresponding portion of the inner surface 21 of the tapered edge 20 of the lower article 102, thereby avoiding in this case also undesirable leakages or spillage of the food component 60 which may be contained inside the closed space 31.

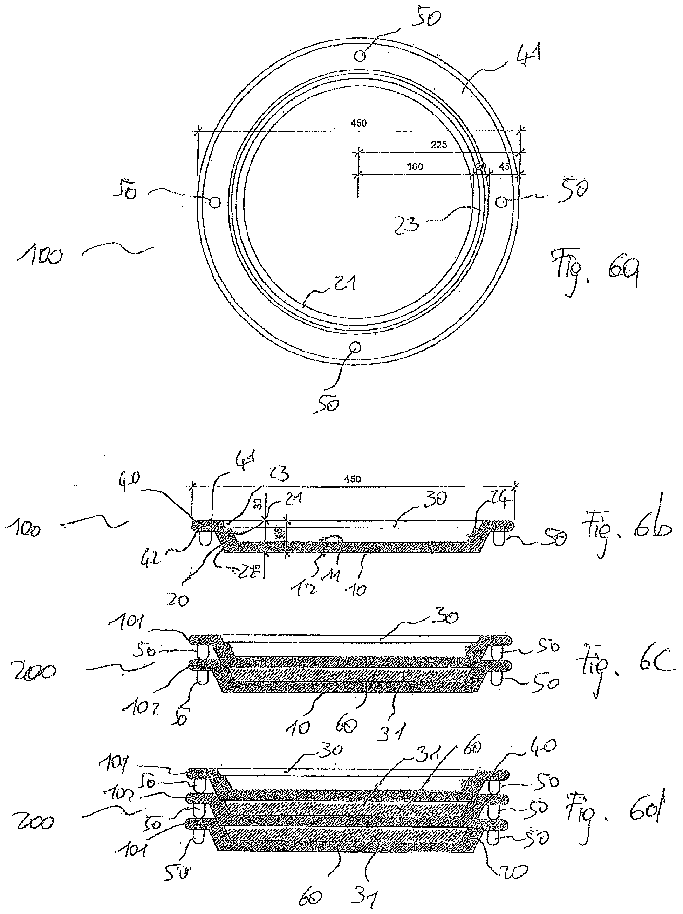

The further embodiment of the article 100 and the product or supplement 200 shown respectively in Figures 6a, 6b, 6c and 6d differs from the other embodiments described above in that it embraces essentially all the characteristic features of the aforementioned embodiments; in fact, the food article 100 shown in Figures 6a and 6b comprises both the projections 50 and the depression 23 described above and formed in accordance with the modes of implementation and the possible variants explained above with reference, respectively, to Figures 5a to 5d and 4a to 4d, so that a further description thereof is omitted for the sake of brevity.

It should also be pointed out that, with the embodiment according to Figures 6a to 6d, it is possible to obtain, in combination, all the advantages offered by the embodiments described above.

It has therefore been shown by means of the above description of the embodiments of the present invention illustrated in the sets of drawings that the present invention is able to achieve the predefined objects and overcome the drawbacks of the products or food supplement according to the prior art. In particular, the present invention is able to provide users, in particular sports users, with a food product formed both by solid components and by components which are non-solid, for example fluid, but also in powder and/or granular form and without the risk of undesirable spillage of the non-solid components; in this way, when eating them, the user will always have the sensation of "biting into" or "chewing" something solid, but may also take in substances which have a different consistency and are therefore able to be ingested and assimilated more rapidly, such as honey in the natural state.

Moreover, by means of the present invention it will be possible to provide the user with a substantially solid edible article or substrate shaped so as to be able to house or contain edible substances or products which are fluid, but also in powder or granular form, the article being able to be eaten, for example at the end of a picnic or a snack, thereby avoiding the problem of having to dispose of the article itself. In particular, the article according to the present invention may be used as an "edible plate", i.e. as a support for both solid and fluid food (for example salads, pasta, meat, but also sauces or creams, or also granular products), to be eaten later at the end of the meal or together with the contents.

Finally, it must be pointed out that the scope of the present invention is not limited to the embodiments described above and illustrated in the set of drawings; on the contrary the scope of the present invention is defined by the claims.

## Claims

1. Edible article (100, 101, 102), in particular a substantially solid edible waffle, said article comprising a base or bottom (10) with an upper surface (11) and a lower surface (12), and a tapered edge (20) with an inner surface (21) and an outer surface (22), where said tapered edge (20) extends from said base or bottom (10) with a predefined inclination, wherein the shape of said article is such that, by arranging two of said articles (101, 102) on top of each other, the bottom (10) and the tapered edge (20) of the upper article (101) are housed at least partly inside the space (30) delimited by the tapered edge (20) of the lower article (102) so as to define a closed space (31) of predefined volume between the said two articles (101, 102), in particular a closed interspace (31) of predefined volume, said closed space (31) being delimited at the bottom, on the sides and at the top, respectively, by the upper surface (11) of the bottom (10) of the lower article (102), at least by a portion of the inner surface (21) of the tapered edge (20) of the lower article (102) and at least by a portion of the lower surface (12) of the bottom (10) of the upper article (101), said article further comprises a peripheral edge (40) which extends outwards from said tapered edge (20), with a lower surface (42) facing towards said tapered edge (20) and an upper surface (41) opposite to said lower surface (42), **characterized in that** said peripheral edge (40) comprises a plurality of projections (50) which extend from said lower surface (42) of said peripheral edge (40), the extension or length of said projections (50) is such that, when two of said articles (101, 102) are arranged on top of each other, the free end (51) of each of said projections (50) of the upper article (101) comes into contact with the upper surface (41) of the peripheral edge (40) of the lower article (102), and wherein
the peripheral edge (40) is parallel to the base or bottom (10).

2. Article according to one of Claim 1, **characterized in that** said inner surface (21) of said tapered edge comprises a depression (23) which defines a supporting surface (24) and **in that**, when two of said articles (101, 102) are arranged on top of each other, a portion of the lower surface (12) of the bottom (10) of the upper article (101) comes into contact with said supporting surface (24) of the tapered edge (20) of the lower article.

3. Article according to one of Claims 1 to 2, **characterized in that** said bottom (10), tapered edge (20) and peripheral edge (40) of said article have a circular, frustoconical and annular form, respectively.

4. Article according to one of Claims 1 to3, **characterized in that** the shape of said bottom (10) and tapered edge (20) is such that, when said two articles (101, 102) are arranged on top of each other, a portion of the outer surface (22) of the tapered edge (20) of the upper article (101) comes into contact with the inner surface (21) of the tapered edge (20) of the lower article (102).

5. Food product (200) suitable in particular for consumption in the sports sector as an energy supplement and/or booster for an athlete, **characterized in that** it comprises at least two edible articles (100) according to one of Claims 1 to 4 and at least one food component (60), **in that** said at least two edible articles (100) are arranged on top of each other and **in that** said at least one food component (60) is contained inside the closed space (31) defined by said two articles (101, 102) arranged on top of each other.

6. Product (200) according to Claim 5, **characterized in that** said at least one food component (60) is of the fluid type having a consistency less than that of said at least one substantially solid edible article (100).

7. Food package (300), **characterized in that** it comprises one or more edible articles (100, 101, 102) according to one of Claims 1 to 4 and/or one of more food products (200) according to one of Claims 5 and 6, said edible articles and/or food products being if necessary arranged on top of each other, said articles and/or products being contained inside a closed protective container or wrapping (301).

8. Package (300) according to Claim 7, **characterized in that** said protective wrapping or container (301) is of the biodegradable type.

9. Method or process for the production of a food product (200) according to one of Claims 5 and 6, **characterized in that** it comprises:
(a) the preparation of at least one first and one second edible article (101, 102) according to one of Claims 1 to 4;
(b) the introduction of at least one food component (60) inside the space (30) delimited by the tapered edge (20) of said at least one first edible article (101);
(c) the arrangement of said at least one second edible article (102) on said at least one first edible article (101) so as to confine said at least one food component (60) in said closed space (31) defined by said first and second food articles (101, 102) arranged on top of each other.

10. Method according to Claim 9, **characterized in that** said at least one food component (60) is of the fluid type, in particular is honey-based.

## Patentansprüche

1. Essbarer Artikel (100, 101, 102), insbesondere eine im wesentlichen feste essbare Waffel, wobei der Artikel eine Basis oder einen Boden (10) mit einer oberen Oberfläche (11) und einer unteren Oberfläche (12) und einen sich verjüngenden Rand (20) mit einer inneren Oberfläche (21) und einer äußeren Oberfläche (22) umfasst, wobei sich der sich verjüngende Rand (20) von der Basis oder dem Boden (10) mit einer vordefinierten Neigung erstreckt, wobei die Form des Artikels derart ist, dass durch Anordnen von zwei der Artikel (101, 102) übereinander, der Boden (10) und der sich verjüngende Rand (20) des oberen Artikels (101) zumindest teilweise innerhalb des Raums (30) untergebracht sind, der durch den sich verjüngenden Rand (20) des unteren Artikels (102) begrenzt wird, so dass ein geschlossener Raum (31) von vordefiniertem Volumen zwischen den beiden Artikeln (101, 102) definiert wird, insbesondere ein geschlossener Zwischenraum (31) mit einem vordefinierten Volumen, wobei dieser geschlossene Raum (31) unten, seitlich und oben jeweils durch die Oberfläche (11) des Bodens (10) des unteren Artikels (102), mindestens durch einen Teil der Innenfläche (21) des sich verjüngenden Randes (20) des unteren Artikels (102) und mindestens durch einen Teil der unteren Oberfläche (12) des Bodens (10) des oberen Artikels (101) begrenzt ist, wobei der Artikel ferner eine Umfangskante (40) aufweist, die sich vom verjüngten Rand (20) nach außen erstreckt, mit einer unteren Fläche (42), dem sich verjüngten Rand (20) zugewandt ist, und einer oberen Fläche (41), die der unteren Fläche (42) gegenüberliegt, **dadurch gekennzeichnet, dass** die Umfangskante (40) eine Vielzahl von Vorsprüngen (50) umfasst, die sich von der unteren Fläche (42) der Umfangskante (40) erstrecken, wobei die Ausdehnung oder Länge der Vorsprünge (50) so ist, dass, wenn zwei der Artikel (101, 102) übereinander angeordnet sind, das freie Ende (51)jedes der Vorsprünge (50) des oberen Artikels (101) mit der oberen Fläche (41) der Umfangskante (40) des unteren Artikels (102) in Kontakt kommt, und wobei die Umfangskante (40) parallel zur Basis oder zum Boden (10) verläuft.

2. Artikel nach einem der Ansprüche 1, **dadurch gekennzeichnet, dass** die Innenfläche (21) der sich verjüngenden Kante eine Vertiefung (23) aufweist, die eine Stützfläche (24) definiert, und dass, wenn zwei der Artikel (101, 102) übereinander angeordnet sind, ein Teil der unteren Oberfläche (12) des Bodens (10) des oberen Artikels (101) mit der Stützfläche (24) des sich verjüngenden Randes (20) des unteren Artikels in Kontakt kommt.

3. Artikel nach einem der Ansprüche 1 bis 2, **dadurch gekennzeichnet, dass** der Boden (10), der sich verjüngende Rand (20) und die Umfangskante (40) des Artikels jeweils eine kreisförmige, kegelstumpfförmige und ringförmige Form haben.

4. Artikel nach einem der Ansprüche 1 bis 3, **dadurch gekennzeichnet, dass** die Form des Bodens (10) und des sich verjüngenden Randes (20) derart ist, dass, wenn die beiden Artikel (101, 102) übereinander angeordnet sind, ein Teil der äußeren Oberfläche (22) des sich verjüngenden Randes (20) des oberen Artikels (101) mit der Innenfläche (21) des sich verjüngenden Randes (20) des unteren Artikels (102) in Kontakt kommt.

5. Nahrungsmittelprodukt (200), das insbesondere zum Verzehr im Sportbereich als Energieergänzung und/oder -verstärker für einen Athleten geeignet ist, **dadurch gekennzeichnet, dass** es mindestens zwei essbare Artikel (100) gemäß einem der Ansprüche 1 bis 4 und mindestens eine Nahrungsmittelkomponente (60) umfasst, dass die mindestens zwei essbaren Artikel (100) übereinander angeordnet sind und dass die mindestens eine Nahrungsmittelkomponente (60) innerhalb des geschlossenen Raums (31) enthalten ist, der durch die beiden übereinander angeordneten Artikel (101, 102) definiert ist.

6. Produkt (200) nach Anspruch 5, **dadurch gekennzeichnet, dass** der mindestens eine Nahrungsmittelkomponente (60) vom flüssigen Typ mit einer Konsistenz ist, die geringer ist als die des mindestens einen im Wesentlichen festen essbaren Artikels (100).

7. Nahrungsmittelverpackung (300), **dadurch gekennzeichnet, dass** sie einen oder mehrere essbare Artikel (100, 101, 102) nach einem der Ansprüche 1 bis 4 und/oder eines oder mehrere Nahrungsmittelprodukte (200) nach einem der Ansprüche 5 und 6 umfasst, wobei die essbaren Artikel und/oder Nahrungsmittelprodukte gegebenenfalls übereinander angeordnet sind, wobei die Artikel und/oder Produkte innerhalb eines geschlossenen Schutzbehälters oder einer Schutzverpackung (301) enthalten sind.

8. Verpackung (300) nach Anspruch 7, **dadurch gekennzeichnet, dass** die Schutzverpackung oder der Schutzbehälter (301) vom biologisch abbaubaren Typ ist.

9. Verfahren oder Prozess zur Herstellung eines Nahrungsmittelproduktes (200) nach einem der Ansprüche 5 und 6, **dadurch gekennzeichnet, dass** es umfasst:
(a) die Herstellung mindestens eines ersten und eines zweiten essbaren Artikels (101, 102) nach einem der Ansprüche 1 bis 4,
(b) die Einführung mindestens einer Nahrungsmittelkomponente (60) in den Raum (30), der durch den sich verjüngenden Rand (20) des mindestens einen ersten essbaren Artikels (101) begrenzt wird;
(c) die Anordnung des mindestens einen zweiten essbaren Artikels (102) auf dem mindestens einen ersten essbaren Artikel (101), um die mindestens eine Nahrungsmittelkomponente (60) in dem geschlossenen Raum (31) einzuschließen, der durch den ersten und zweiten übereinander angeordneten Nahrungsmittelartikel (101, 102) definiert ist.

10. Verfahren nach Anspruch 9, **dadurch gekennzeichnet, dass** die mindestens eine Nahrungsmittelkomponente (60) vom flüssigen Typ ist, insbesondere auf Honigbasis.

## Revendications

1. Article comestible (100, 101, 102), en particulier une gaufre comestible sensiblement solide, ledit article comportant une base ou un fond (10) avec une surface supérieure (11) et une surface inférieure (12), et un bord conique (20) avec une surface intérieure (21) et une surface extérieure (22), où ledit bord conique (20) s'étend à partir de ladite base ou ledit fond (10) avec une inclinaison prédéfinie, dans lequel la forme dudit article est telle que, en agençant deux desdits articles (101, 102) l'un au-dessus de l'autre, le fond (10) et le bord conique (20) de l'article supérieur (101) sont logés au moins partiellement à l'intérieur de l'espace (30) délimité par le bord conique (20) de l'article inférieur (102) de manière à définir un espace fermé (31) de volume prédéfini entre lesdits deux articles (101, 102), en particulier un espace intermédiaire fermé (31) de volume prédéfini, ledit espace fermé (31) étant délimité au niveau du fond, sur les côtés et au niveau du dessus, respectivement, par la surface supérieure (11) du fond (10) de l'article inférieur (102), au moins par une partie de la surface intérieure (21) du bord conique (20) de l'article inférieur (102) et au moins par une partie de la surface inférieure (12) du fond (10) de l'article supérieur (101), ledit article comporte en outre un bord périphérique (40) qui s'étend vers l'extérieur à partir dudit bord conique (20), avec une surface inférieure (42) tournée vers ledit bord conique (20) et une surface supérieure (41) opposée à ladite surface inférieure (42), **caractérisé en ce que** ledit bord périphérique (40) comporte une pluralité de saillies (50) qui s'étend à partir de ladite surface inférieure (42) dudit bord périphérique (40), l'extension ou la longueur desdites saillies (50) est telle que, lorsque deux desdits articles (101, 102) sont agencés l'un au-dessus de l'autre, l'extrémité libre (51) de chacune desdites saillies (50) de l'article supérieur (101) vient en contact avec la surface supérieure (41) du bord périphérique (40) de l'article inférieur (102), et dans lequel
le bord périphérique (40) est parallèle à la base ou au fond (10) .

2. Article selon la revendication 1, **caractérisé en ce que** ladite surface intérieure (21) dudit bord conique comporte une dépression (23) qui définit une surface de support (24) et **en ce que**, lorsque deux desdits articles (101, 102) sont agencés l'un au-dessus de l'autre, une partie de la surface inférieure (12) du fond (10) de l'article supérieur (101) vient en contact avec ladite surface de support (24) du bord conique (20) de l'article inférieur.

3. Article selon l'une des revendications 1 à 2, **caractérisé en ce que** lesdits fond (10), bord conique (20) et bord périphérique (40) dudit article ont une forme circulaire, frustoconique et annulaire, respectivement.

4. Article selon l'une des revendications 1 à 3, **caractérisé en ce que** la forme desdits fond (10) et bord conique (20) est telle que, lorsque lesdits deux articles (101, 102) sont agencés l'un au-dessus de l'autre, une partie de la surface extérieure (22) du bord conique (20) de l'article supérieur (101) vient en contact avec la surface intérieure (21) du bord conique (20) de l'article inférieur (102) .

5. Produit alimentaire (200) adapté en particulier à la consommation dans le secteur sportif en tant que supplément énergétique et/ou stimulant pour un athlète, **caractérisé en ce qu'il** comporte au moins deux articles comestibles (100) selon l'une des revendications 1 à 4 et au moins un composant alimentaire (60), **en ce que** lesdits au moins deux articles comestibles (100) sont agencés l'un au-dessus de l'autre et **en ce que** ledit au moins un composant alimentaire (60) est contenu à l'intérieur de l'espace fermé (31) défini par lesdits deux articles (101, 102) agencés l'un au-dessus de l'autre.

6. Produit (200) selon la revendication 5, **caractérisé en ce que** ledit au moins un composant alimentaire (60) est de type fluide présentant une moindre consistance que celle dudit au moins un article comestible (100) sensiblement solide.

7. Emballage de produit alimentaire (300), **caractérisé en ce qu'il** comporte un ou plusieurs articles comestibles (100, 101, 102) selon l'une des revendications 1 à 4 et/ou un ou plusieurs produits alimentaires (200) selon l'une des revendications 5 et 6, lesdits articles comestibles et/ou produits alimentaires étant si nécessaire agencés l'un au-dessus de l'autre, lesdits articles et/ou produits étant contenus à l'intérieur d'un contenant ou emballage protecteur fermé (301).

8. Emballage (300) selon la revendication 7, **caractérisé en ce que** ledit emballage ou contenant protecteur (301) est de type biodégradable.

9. Méthode ou procédé pour la production d'un produit alimentaire (200) selon l'une des revendications 5 et 6, **caractérisé en ce qu'**il comprend :
(a) la préparation d'au moins un premier et un second article comestible (101, 102) selon l'une des revendications 1 à 4,
(b) l'introduction d'au moins un composant alimentaire (60) à l'intérieur de l'espace (30) délimité par le bord conique (20) dudit au moins un premier article comestible (101),
(c) l'agencement dudit au moins un second article comestible (102) sur ledit au moins un premier article comestible (101) de manière à confiner ledit au moins un composant alimentaire (60) dans ledit espace fermé (31) défini par lesdits premier et second articles alimentaires (101, 102) agencés l'un au-dessus de l'autre.

10. Méthode selon la revendication 9, **caractérisée en ce que** ledit au moins un composant alimentaire (60) est de type fluide, en particulier est à base de miel.
